# EUROPEAN PATENT SPECIFICATION

(11) **EP 3 337 313 B1**
(45) Date of publication and mention of the grant of the patent: **25.11.2020**
(21) Application number: 16762908.8
(22) Date of filing: 28.07.2016
(51) Int. Cl.: A01K 1/00, A01K 1/01, A01K 29/00

(54) **CUBICLE SHED WITH A CUBICLE MONITORING SYSTEM**
BOXENSTALL MIT EINEM BOXENÜBERWACHUNGSSYSTEM
ÉTABLE À BOXES AVEC SYSTÈME DE SURVEILLANCE DE BOX

(30) Priority: 17.08.2015 NL 2015309
(43) Date of publication of application: 27.06.2018
(73) Proprietor: Lely Patent N.V., 3147 PB Maassluis (NL)
(72) Inventor: HOLLANDER, Cornelis Jan, 3147 PB Maassluis (NL); VAN HALSEMA, Frans Emo Diderik, 3147 PB Maassluis (NL); LOOSVELD, Serge Louis, 3147 PB Maassluis (NL)
(74) Representative: Octrooibureau Van der Lely N.V.
(86) International application number: PCT/NL2016/050559
(87) International publication number: WO 2017/030437

(56) References cited:
- EP-A2- 1 564 664
- WO-A1-2010/057266
- WO-A1-2012/095306
- WO-A1-2014/021712
- WO-A2-2005/084421
- DE-U1-202008 015 686
- NL-C- 2 009 498

## Description

The invention relates to a cubicle shed with a plurality of cubicles which can be filled, and in particular are filled, with litter material.

Such cubicle sheds are used in particular in dairy farming. In this case, the dairy animals, such as in particular dairy cows, but possibly also goats, etc., are kept in an animal shed, where they eat and ruminate the feed (roughage) in quiet surroundings. Often, cubicles are used to provide this environment, in which case every dairy animal can go and lie down in its individual cubicle. Also, meat animals are sometimes kept in a(n old) cubicle shed. For the sake of convenience, it is assumed below that the animals are dairy animals, in particular dairy cows. The cubicles of such a cubicle shed are often filled with a litter material, such as straw, sawdust, wood shavings or dried manure. These serve to make the cows more comfortable compared to lying directly on the animal shed floor, which is usually made of concrete. The material may also absorb moisture in many cases, such as urine or leaking milk.

International patent publication WO2012/095306 discloses a method for looking after, monitoring and/or surveilling animals by means of a handling device, said animals being present in a space. The handling device is designed to be able to move to any free coordinate of said space. In each individual space there is an animal, such as a calf. A feed container with a teat is also assigned to each space.

A practical problem associated with such cubicles is the fact that the litter material may become contaminated, also that it may become (too) unevenly distributed in the cubicle, for example due to the cow pushing or kicking it out. This obviously reduces the practical value and comfort of the cubicle for the cows. In severe cases, injuries may result from the fact that they have to lie on a floor which is too hard. It is also possible that the cows may avoid such cubicles, which may result in turmoil at the cubicles where the distribution of the litter material is still good, and could at least result in a reduced ruminating activity, which in both cases has adverse consequences for the well-being and the milk production of the cows.

In order to prevent the above, a dairy farmer until now had to replenish the litter material regularly, which is a labor-intensive activity. In particular with animal sheds continuously increasing in size, it is a time-consuming activity to check all the cubicles.

It is an object of the invention to provide a solution in order to make monitoring of the quality of the filling material of the cubicles less labor-intensive.

To this end, the invention provides a cubicle shed as claimed in claim 1.

The aircraft is, for example, a Zeppelin or another levitating craft, but preferably a so-called drone or Unmanned Aerial Vehicle (UAV). This then relates to, in particular, aircraft which are driven by two or more propellers, which can be controlled very accurately and can even hover in one spot, as a result of which they can quickly and efficiently collect sensor information. The sensor device, which will be discussed in greater detail below, performs one or more observations of the contents of the cubicles. These observations are then processed in a processing device which in turn provides information about these contents. Based on these contents, the animal farmer may then decide, for example, to clean or otherwise treat one or more cubicles, or to postpone such activities because everything is still in order. In this way, he can monitor the cubicle quality very efficiently. Although the drone has the advantage of greater speed and mobility, a Zeppelin has the advantage that it is often less noisy, and can hover in the air in particular almost silently, with regard to noise, which will result in less disturbance, particularly with easily startled animals.

As claimed in the invention, the monitoring system comprises an aircraft for flying past one or more cubicles. In this way, it is possible to monitor all these cubicles by means of a single sensor device, which is simple and reduces the number of resources for sensors. In addition, an aircraft can move quickly without endangering the animals, contrary to, for example, a vehicle driving across the floor which may after all collide with cows' feet and the like. Furthermore, it is important to be able to measure, and therefore fly, often, since the cubicles will be occupied a great deal of the time, and the sensor cannot produce an accurate assessment of the state of the litter material. On average, a cow spends more than half of the day in a cubicle and therefore, for economic reasons, the number of cubicles will not, or with only slightly, be greater than the number of cows in an animal shed. In this case, it should be noted that a cubicle shed which, in addition, is provided with a voluntary milking system, the situation where all cubicles are empty and their state can thus be assessed, either by a human or by a sensor, will hardly ever arise. Thus, the invention provides a major advantage in this case, since the aircraft can simply take another turn if not all cubicles can be measured. Therefore, the cubicle shed as claimed in the invention is advantageously provided with a voluntary milking system, comprising one or more milking robots.

Further particular forms of the invention are described in the dependent claims, as well as in the following description. Thus, in embodiments, the control unit is configured to send the aircraft a predetermined number of times per unit time, such as once a day, past at least a subset of the cubicles. By means of such a standard round, it is possible to perform an observation at sufficiently regular intervals about the state of the litter material in this cubicle subset. Thus, the aircraft may, for example, in an animal shed with two rows of cubicles, monitor one row of cubicles per flight, and in between process and/or send the information generated to a processing device. It is also possible for the control unit to make the aircraft fly for as long as is necessary to perform an observation, for example, for a predetermined number of cubicles. Of course, different numbers per day, etc. are not ruled out.

In an attractive embodiment, the cubicle monitoring system comprises a plurality of aircraft, a so-called 'swarm'. This not only offers the advantage that the task of observing the cubicles can in principle be performed proportionally much more quickly, but also that the system can cope with one or more, but of course not all, aircraft dropping out. In addition, a first aircraft may also, for example, be recharged at a charging device, or exchange data, and thus not be airborne, while a second aircraft may simultaneously carry out the monitoring flight.

In embodiments, the animal shed comprises a cubicle occupation-determining device, configured to determine a "cubicle empty" signal if a cubicle is not occupied by an animal, in which the control unit is configured to send the craft to an unoccupied cubicle, based on the "cubicle empty" signal. In this case, the expression "send to" is generally understood to mean visiting and observing at least said cubicle, but is in particular understood to mean specifically sending an aircraft to said cubicle and making an observation of its contents there. As claimed in these embodiments, a device is provided which makes it possible to determine which cubicles are occupied or empty, and on the basis thereof control the aircraft. Thus, it is possible to automatically ensure that all cubicles are monitored. After all, it is quite simple to send the aircraft to perform an observation when an "empty" cubicle is detected. This could even be carried out manually, as the control unit can be configured to work remotely. Advantageously, the control unit is configured to make the aircraft automatically visit and observe a cubicle which has been detected as being empty and is still to be observed. A system which is known per se, such as Nedap Cow Positioning, may for example be used as cubicle occupation-determining device and in which the position of tags of a cow may be displayed on a plan of the animal shed. In this way, it is clear when a cubicle is occupied or empty. Advantageously, the Cow Positioning System for example is then programmed in such a manner that it is able to give such an empty or occupied indication. Of course, other systems are also possible. For example, a system may be provided with a(n optical or infrared) camera and image recognition or with a tag reader or the like for each cubicle. Such a system is able to determine for each cubicle whether it is empty or occupied. Alternatively or in addition, a system may be provided which determines a position of the one or more animals present in the animal shed(s) and, based thereon, determines which cubicles are occupied and which are empty.

In embodiments, the animal shed furthermore comprises one or more other devices for carrying out an animal-related action, as well as an animal shed management system which is connected to the control unit and controls the one or more other devices in the animal shed in respective states, with the control unit controlling the aircraft on the basis of the respective state. This means that devices may have been provided in the animal shed which have an effect on the occupation of the cubicles, which effect is greater in one state than in the other. Thus, it is then sensible to link the control unit of the aircraft to the state of said device. All this will be explained in more detail below by means of examples.

In particular, the one or more other devices comprise a milking device for batch-wise milking dairy animals which can be brought to a milking state by the animal shed management system, in which the control unit is configured to move the aircraft based on the milking state. With batch-wise or group-wise milking, such as in a herringbone milking parlor or rotating milking parlorwhich are known perse, at least some of the dairy animals, and often the entire herd, will be driven to the milking system or a waiting area which is arranged in front thereof. At that time, many, if not all, cubicles will be empty. If the animal shed management system then brings the milking system into the state associated with 'milking', which may also be effected by the milker pressing the button, and the control unit of the aircraft causes the aircraft to fly along the cubicles, it is possible to determine the state of many cubicles in an efficient manner. It should be noted that this could, in principle, also be carried out by a human, but the latter is needed for the milking procedure and therefore not available to make a tour of the cubicles. In addition, it should also be noted that with a milking system for voluntary milking, such as robot milking stall systems, the dairy animals will generally not be used to visiting the latter as a group.

Alternatively or in addition, the one or more other devices comprise a feed-dispensing station for simultaneously feeding a plurality of animals, as well as a feed device which can be brought into a feed-dispensing state by the animal shed management system, in which feed-dispensing state the feed device dispenses feed to the feed-dispensing station, with the control unit being configured to move the aircraft based on the feed-dispensing state. Dairy animals learn quickly that with certain activities fresh and tasty feed is made available in the animal shed. One of these situations relates to the dispensing of freely available feed. An example thereof is, for example, an automated roughage system, such as the Lely Vector® system or similar systems. Such a system regularly offers a new portion of roughage, in particular in a feeding alley at a feeding fence, but alternatively also in feeding troughs or the like. Dairy animals are attracted by the new feed and many, if not all, dairy animals will go to the new feed, so that many, if not all, cubicles will be empty and thus available for an observation. The animal shed management system is then preferably coupled with the control system of the automated feed system, or controls the latter itself. If new feed is then fed, the animal shed management system can give the control unit of the aircraft a command to carry out an observation tour.

Alternatively or in addition, the one or more other devices comprise a feed-dispensing station for simultaneously feeding a plurality of animals, as well as a feed-pushing device which can be brought into a feed-pushing state by the animal shed management system, in which feed-pushing state the feed-pushing device pushes back feed at the feed-dispensing station, in which the control unit is configured to move the aircraft based on the feed-pushing state. In this case, "pushing back" comprises pushing the feed towards the animals, not pushing old feed away from the feeding station or the like. As has been mentioned above, a feeding station comprises, for example, a feeding fence which separates the animals from the feeding alley in which the feed is situated. When eating this feed, the animals will fling part of the feed away so that it is out of their reach. When the feed pusher, such as a Lely Juno®, Hetwin Stallboy or the like pushes the feed back to the animals, new feed is in effect becoming available. Therefore, many animals will also be drawn to the feeding station by a feed-pushing action. When the animal shed management system thus brings the feed pusher into a pushing mode, this may also cause the control unit of the aircraft to make the latter fly past the cubicles to perform observations about the cubicles which are then empty.

Other devices are not excluded if they have a similar concentrating action on the animals. For example, any waiting area may serve as such. After all, as soon as these open to allow animals in, the "associated" cubicles will be empty, and thus available for an observation. Thus, a waiting area could, for example, be used for inseminating a number of animals, hoof trimming or another animal treatment or check-up by a veterinary doctor or the like. In such a case, many, or sometimes all, animals are often gathered in a waiting area. Setting the waiting area to receiving and locking up the animals, i.e. closing the gate, may then, for example, be the signal for the control unit of the aircraft to fly.

It should be noted here, that the animal shed management system with any other device may also be composed of separate control units of the present devices, such as milking systems and feed providers or feed pushers, in which these can communicate with each other, as well as with the control unit of the aircraft. The common control units could then be regarded as the animal shed management system. In all these cases, the aircraft will fly and observe based on an action performed by the other device.

In embodiments, the sensor device comprises a recording device for recording a spatial image of the contents of a cubicle. In this case, it may be that the recording device only collects the information, with the processing device forming the spatial or 3D image therefrom. The processing device may either be provided on the aircraft or on "terra firma", such as in a computer, for example a(n animal shed) management computer. The recording device could also itself process the sensor signals it records to form the spatial image, and send that image to a further processor. Incidentally, the term "recording device" should be interpreted broadly here and not as a device which records a sensor value in a step-by-step manner (point by point or line by line). Rather, any device which can record a spatial image by electromagnetic, acoustic etc. means is suitable for these embodiments. The term spatial image is here understood to mean, for example, a 2D image with distance information for each image point, or even directly a set of relevant points with their 3D coordinates.

For example, the recording device comprises an ultrasound scanner or laser scanner or a stereo camera, such as a 3D camera. Such devices are devices which are known per se for forming a spatial image. Thus, two (or more) cameras, such as optical or infrared cameras, may provide a spatial image with distance information by means of triangulation or other image-processing techniques. Alternatively, the recording device may also be a structured light camera, such as a PrimeSense™ camera, or a so-called time-of-flight camera, such as a Mesa Imaging "SwissRanger 4000" camera, or another 3D camera.

In particular, the processing device is configured, and preferably to this end provided with image-recognition software, to process the recorded spatial image in order to generate information regarding the amount and/or the distribution of the contents of at least one of the cubicles. To this end, an average height of the material in the cubicle may be determined, for example. This is already a direct indication for the amount of material. The height may be determined, for example, by comparison with a reference height, such as that of a partition between the cubicles. Furthermore, a shape of the surface of the material can be formed from the spatial image, for example. This surface in turn gives a good impression of the distribution of the material. After all, the height should preferably not deviate too greatly from the average value, and should certainly not be much greater on one side than on the other side.

More particularly, the processing equipment is configured to recognize the cubicles and the livestock animals. It will be clear that, if a cubicle is occupied by a livestock animal, the obtained spatial image cannot give a good impression of the amount of or distribution of the litter material. If the processing equipment is then also configured to recognize such a livestock animal, the reliability of the information could increase. In order to recognize a livestock animal, it may suffice to look at specific shapes or dimensions. Thus, in most cases, the height of a livestock animal will be greater than that of even a heap of litter material which has been pushed up high. Alternatively or in addition, the color, surface structure and even temperature of the object (litter or animal) may also help to recognize livestock animals. Furthermore, it may be advantageous to recognize cubicles as well. Not only is this useful when maneuvering or navigating, but also to link a recorded image to a certain cubicle, or to determine whether a recorded image does appertain to a cubicle. In this case, it is advantageous that cubicles usually have a fixed shape throughout the entire animal shed.

Alternatively or in addition, the sensor device comprises a camera for recording an image of the surface of the contents of the cubicles, in particular an optical camera, thermal imaging camera or an infrared camera. By means of such a sensor/camera, it is possible, for example, to get a good impression of the condition of the surface by way of a color which indicates impurities or moisture. Also, it is often possible to distinguish in particular fresh manure or urine from the surrounding cooler litter layer since the former will have a higher temperature than the second, which can be determined by means of a thermal imaging camera or infrared camera. Also, this may be an indication to have the cubicle cleaned. In embodiments, the processing device is to this end configured to process the recorded image of the surface in order to generate information regarding the quality of the contents of the cubicles.

In embodiments, the processing device is provided with image-recognition software configured to recognize the cubicles and the livestock animals, and to generate information about a state, in particular a distribution, soiling or manure content, of material in the cubicle. Although the recorded image could be sent to, for example, a computer or display for assessment by an operator, who may then take action or not, it may be advantageous to further automate the cubicle monitoring system further so that it can automatically generate such information by means of the image-recognition software. The information generated can then be sent to the operator, for example only in a desired case, such as in the case of soiling or the like. It should be noted that details about image recognition of soiling or the like, such as recognizing a manure heap on litter, have already been described in the prior art. According to the invention, the processing device furthermore comprises reference information as well as at least one comparison criterion, in which the processing device is configured to compare the information generated with the reference information, and to trigger an alarm signal if the result of the comparison meets at least one of the one or more comparison criteria. The reference information may comprise, for example, limits within which the degree of soiling or distribution of the litter material is still deemed to be acceptable. Thus, a minimum thickness of the litter layer of, for example 1 cm or 5 cm or any other desired thickness could be specified. If the system, for example, determines that the thickness measured in a cubicle is below this reference value in any spot, or for example on a predetermined minimum surface, this may be cause to send an alarm signal, such as to a supervisor or operator. Thus, the latter only receives messages for a cubicle when actual action has to be taken. This action may be performed immediately or it is also possible to wait until a certain number of cubicles has to be treated. It is also conceivable for the reference information to specify that a predetermined number of cubicles has to satisfy the criteria for cleaning or replenishment or redistribution of litter material before an alarm signal is generated. In embodiments, the alarm signal comprises information about the observed state, for example an amount of or distribution of soiling of a cubicle, which cubicle is affected (position), etc.

As has been explained above, the processing device may provide information or alarm signals about cubicles and their state with regard to distribution and soiling of the litter material. Thus, an operator does not have to make an unnecessary tour if, for example, all cubicles are still in satisfactory condition. This increases the efficiency of his work. According to the invention, the system furthermore comprises a cubicle treatment vehicle, which is preferably autonomously movable under the control of the control unit, and comprises at least one of a litter material cleaning device, a litter material dispensing device, and a litter material redistribution device. In this way, the associated action may furthermore also be automated, so that the operator can limit his work to exceptions and the like. Such vehicles have already been described in the prior art, such as in NL-2009498-C. Also, it is possible to provide some of these functions in a first vehicle, and some other ones in a second vehicle, or also all functions in a separate vehicle.

According to the invention, the cubicle treatment vehicle is controllable based on the alarm signal. This has the advantage that the vehicles can be sent automatically or by an operator in a targeted manner to one or more cubicles on the basis of the alarm signal. This makes navigation of the vehicle more efficient and, in particular, also renders unnecessary driving among livestock animals obsolete.

The invention will now be explained in more detail with reference to the drawing, which shows some non-limiting embodiments, and in which:
- figure 1 shows a diagrammatic top view of a cubicle shed as claimed in the invention;
- figure 2 shows a detail of an alternative cubicle shed as claimed in the invention in a diagrammatic top view;
- figure 3 shows a diagrammatic top view of a detail of another cubicle shed as claimed in the invention;
- figure 4 shows a diagrammatic view of a drone during use in the invention; and
- figure 5 shows a diagrammatic view in cross section of a cubicle treatment vehicle for use in the invention.

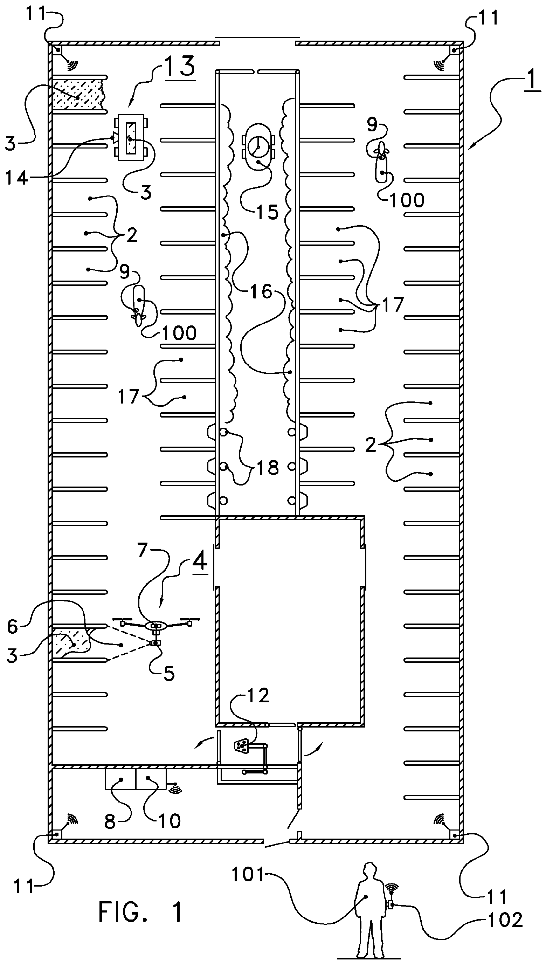

Figure 1 shows a diagrammatic top view of a cubicle shed as claimed in the invention. The cubicle shed 1 comprises cubicles 2 containing litter material 3.

Reference numeral 4 diagrammatically denotes a drone with a camera 5 with a field of vision 6, as well as a control unit 7. Reference numeral 8 denotes a central computer with a transmitter 10. Reference numeral 11 denotes box occupation monitors and reference numeral 12 denotes a milking robot and reference numeral 13 a cubicle treatment vehicle with a dispensing device 14 for litter material 3. Reference numeral 15 denotes a feed pusher for feed 16, while reference numeral 17 denotes feeding stations and reference numeral 18 concentrate dispensers.

Furthermore, dairy cows 100 are walking around in the cubicle shed 1 which each have a tag 9 for identification purposes. Furthermore, a farmer 101 holding a mobile phone 102 is shown.

The cubicle shed 1, which could incidentally also be used for meat animals, obviously without the milking device, houses a plurality of dairy cows 100. At feeding stations 17, the dairy cows 100 eat feed (roughage) 16, such as hay and the like, and at concentrate dispensers 18 they eat concentrate. The ingested feed 16 may then be ruminated in, in particular, cubicles 2, on the floor of which there is litter material 3.

Due to movement of the cow, this litter material may become unevenly distributed in the cubicle. In addition, the litter material may become soiled with, for example, manure or the like. Therefore, the litter material has to be replenished and/or redistributed regularly. This replenishment and/or redistribution can obviously be carried out manually or by means of a cubicle treatment vehicle 13, for example such as disclosed in NL-2009498-C. For the purpose of replenishing the litter material, the vehicle 13 has a supply of litter material 3 as well as a dispensing device 14.

In order to get a good impression of the state of the litter material in the cubicles, a drone 4 with a camera 5 with an image field 6 is provided, so that this can see inside the cubicles. The drone has its own drone control unit 7 for flying along a route which it may have determined itself or which may have been set, and optionally for controlling, such as directing, the camera. The captured images can be transferred to a central computer 8 via a transmitter or transceiver 10. It should be noted that the control unit 7 may partly be provided in the central computer 8, while processing of the images recorded by the camera 5 takes place either in the control unit 7 of the drone or, and advantageously, in the central computer 8. Furthermore, the central computer 8 may comprise a control unit for other apparatus, such as a milking robot 12, the aforementioned cubicle treatment vehicle 13 as well as, for example, a feed pusher 15. In this case, it should be noted that the central computer 8 is only diagrammatically shown as a single unit, but may also comprise a distributed computer device, with one or more modules which are distributed across the cubicle shed 1, such as one module for each device to be controlled. Local controllers, such as for switching valves or the like, may also be considered to form part of the central computer 8.

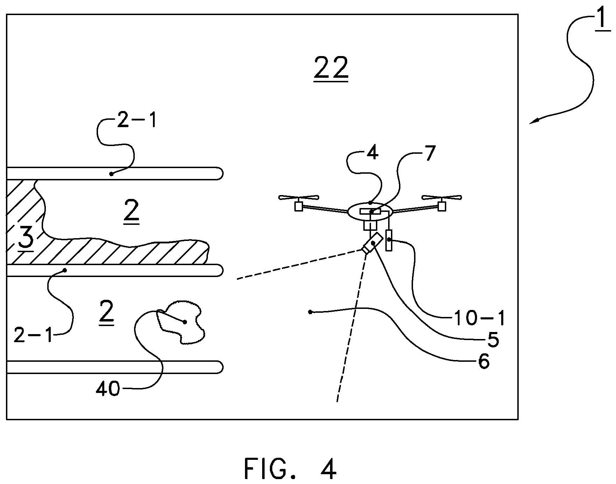

The central computer 8 may direct the drone 4 to fly along a route, such as by setting a route and giving a starting signal, in order to assess one or more cubicles 2 in the course thereof with regard to the state of the litter material therein. To this end, the central computer 8 contains processing software for processing the images of the camera 5. All this will be explained in more detail in connection with figure 4. On the basis of the processed images, the computer 8 generates information about the amount of litter material in the observed cubicles and/or the distribution and/or the quality thereof, in particular the possible soiling thereof. This information may be sent, for example, to a farmer 101 with a mobile phone 102. To this end, the transmitter 10 may make this information available to the mobile phone 102 via a wireless network. Also, it is possible to send this information to a computer in an office via another connection, such as via the internet, or via a physical cable network. In all cases, the farmer 101, or any other individual, can assess the information in order to decide whether he or she has to treat, such as clean, one or more cubicles. Alternatively, the information generated can be used to activate the cubicle treatment vehicle 13, for example, to clean one or more cubicles which have been soiled or to provide one or more cubicles which contain insufficient litter material 3 with new litter material. To this end, the computer 8 may provide the vehicle 13 with a suitable route and/or other tasks.

If a cow 100 is situated in a cubicle 3, it is obviously not readily possible for the drone 4 to assess the state of the litter material 3. In many cubicle sheds 1, the number of cows 100 approximately matches the number of cubicles 2 and thus the occupation of the cubicles 2 will often be high. So as to still be able to monitor the state of all cubicles 2 efficiently, that is to say without having to fly too often, a cubicle occupation monitor 11 is also provided in the form of a cow position-determining system, such as is offered, for example, by the company Nedap. Such a system consists of antennas which determine the positions of the tags 9 of the dairy cows 100 in the animal shed 1. This is carried out, for example, by triangulation of the signals received by, in this case four, antennas 11, after which it is possible to determine whether a cow 100 is present in a cubicle 2, and if so, in which cubicle, by triangulation or the like. The cubicle occupation monitor 11 will then also be operatively connected to the computer 8. Thus, the computer 8 can efficiently determine which cubicle 2 is empty, so that the drone 4 can fly to it and observe the state of the litter material therein.

In some circumstances, the occupation of the cubicles 2 will decrease, in particular if an event occurs which attracts many dairy cows 100. A clear example thereof is the provision of fresh feed 16 or also the pushing back of the feed 16 by the feed pusher 15. In such a case, many cubicles 2 will be empty, so that the drone 4 can observe the state of these cubicles. In this way, the number of flight movements can be restricted. Obviously, it is not necessary to assess all empty cubicles 2 in one flight movement, but this task can instead be divided over two or more partial flight movements, for example in order not to generate an excessively large amount of data to be processed.

If the cows 100 are being milked, they are obviously not present in a cubicle. If cows are milked using a milking robot, they will in most cases be free to determine their own milking time and the occupation of the cubicles 2 will on average still be quite high. If, however, no milking robot 12 but a conventional milking system is provided, the cows will be driven once, usually twice and sometimes three times a day to the milking system in order to be milked there. In such a case at least a large number, or even all, of the cubicles 2 will be empty. This obviously offers an excellent opportunity to allow the drone 4 to assess the cubicles and the vehicle 13 to treat one or more cubicles, if required. It should be noted that when milking takes place, the one or more operators are involved with the milking and have no time to check on the cubicles.

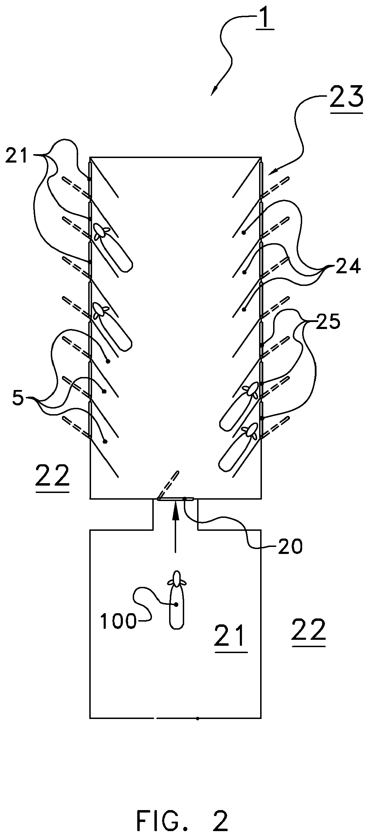

Figure 2 shows a diagrammatic top view of a detail of another cubicle shed as claimed in the invention. Here, the animal shed 1 comprises an access gate 20 of a waiting area 21 which is separated off from the shed space 22, to a herringbone milking parlor 23 with milking stations 24 and exit gates 25. The herringbone milking parlor 23 is an example of a conventional milking system which may be used instead of a milking robot. In this case, dairy cows 100 are driven, for example, to a waiting area 21, from where they are given access in groups to the milking stations 24 via the access gate 20. At the milking stations 24, they are milked by means of conventional milking equipment (not shown), after which they leave the herringbone milking parlor 23 via exit gates 25 and go to the shed space 22.

With such a conventional milking device, in principle either all cows 100 in the animal shed 1 will be driven to the waiting area 21 or at least all cows from a certain group or from a certain part of the shed. However, in all cases, a relatively large number of cubicles will be empty for inspection by the drone with camera.

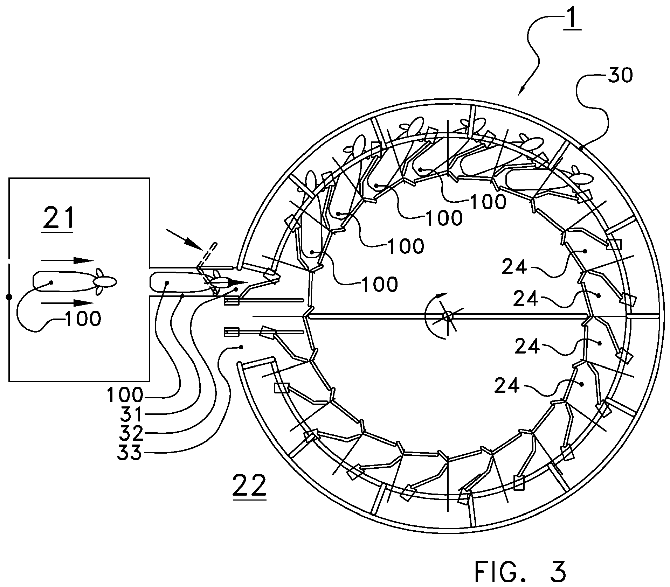

Figure 3 shows a diagrammatic top view of a detail of another cubicle shed as claimed in the invention. Here, the animal shed 1 comprises a rotating milking parlor 30. Again, the cows 100 wait in a waiting area 21 which gives access to milking stations 24 on a rotating platform via an air lock 31 and an entrance 32. At the end of a rotation, the dairy cows may leave the milking stations 5 via an exit 33. Also in this case, either all dairy cows in the shed, or at least a group thereof, will be driven to the waiting area 21. Many cubicles will then be vacant for inspection as well.

Figure 4 diagrammatically shows an aircraft for use with the invention. Here, the aircraft is a drone 4 with propellers and a camera 5 with an image field 6 as well as a control unit 7 and a transmitter 10-1. The figure also shows cubicles 2 with cubicle partitions 2-1, as well as litter material 3 and some soiling 40, such as a heap of manure.

Here, the illustrated drone 4 comprises two propellers, but obviously may also comprise more propellers, such as four. Also, the drone 4 may be another type of aircraft, such as a Zeppelin.

Underneath the drone 4, a camera 5 is suspended which may, for example, be an optical camera or a 3D scanner/3D camera or may also be an ultrasound camera or ultrasound sensor. By means of the camera or sensor, with for example an image field 6, the drone 4 records an image of the cubicles 2. The camera 5 is able to determine that in the cubicle 2, which is at the top of the figure, the litter material 3 is distributed very unevenly and is lacking in a large part, i.e. the part which is not hatched. This information may be determined, for example, by the fact that the litter material 3 has a different color or the like in the image than the shed floor. If the camera 5 is a 3D camera, it is also possible to infer from a great difference in thickness or large difference in the height values of the contents of the top cubicle that the distribution is very uneven. The same holds true for an ultrasound camera or laser scanner or stereo camera.

In the case of the cubicle which is at the bottom in the figure, it is possible to infer from the image that there is some soiling 40, such as a heap of manure, for example due to the fact that the color differs both from that of the litter material and that of the floor of the shed space 22, or that the color corresponds with a predetermined soiling color, such as dark brown to black. It is also possible to determine a difference in reflection or, for example, surface structure using an ultrasound scanner, or optical camera or 3D camera, respectively. Also with these, as well as with any other known technique, is it possible to determine if the entity 40 should be removed.

The recorded images may either be processed by the control unit 7 or be sent to a receiver via the control unit 7 and the transmitter 10-1, such as a receiver of a central computer (not shown here) in order to be processed there. It will be clear that the information generated is preferably linked to a number or position of a cubicle 2, unless it is used immediately by a driving vehicle or the like. To this end, it is for example possible to link position information of the drone to the information generated about the cubicle, for example on the basis of a similar position-determining system as that for the dairy cows in figure 1. Other systems, such as optical number recognition at the cubicles, RFID systems for each cubicle etc. are also possible.

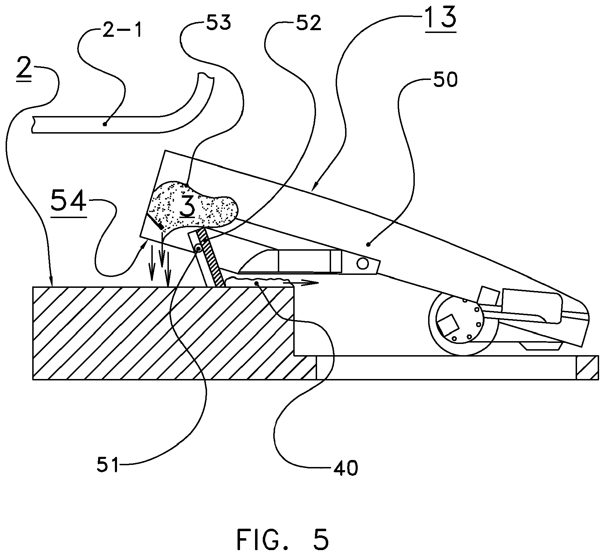

Figure 5 shows a diagrammatic view, partly in cross section, of a cubicle treatment vehicle for use with the invention. The vehicle 13 comprises a frame 50 which can tilt using means which are not illustrated in any more detail, in order thus to place a scraper which is rotatable about a shaft 51 on the floor of the cubicle 2. By then, for example, driving backwards, in the direction of the arrow, the scraper can sweep away the soiling 40. Incidentally, the soiling 40 may alternatively also comprise litter material 3 to be removed. The vehicle 13 furthermore comprises a storage space 53 with a dispensing opening 54 for depositing new, fresh litter material. For other details, reference is made here to the Netherlands patent NL/2009498-C.

The illustrated embodiments are not intended to be limiting, but only to serve as an explanation of the invention, the scope of protection of which is determined by the attached claims.

## Claims

1. A cubicle shed (1) with a plurality of cubicles (2) which can be filled, and in particular are filled, with litter material (3), as well as a cubicle monitoring system which is configured to monitor a plurality of cubicles (2) for livestock animals (100) in a livestock pen, and which is provided with
- an aircraft (4) which is autonomously movable along the cubicles (2), in particular a Zeppelin or drone, which is provided with a sensor device for observing the contents of the cubicles (2),
- a control unit (7), in particular provided on the aircraft (4), for moving the aircraft (4) at least along a subset of the cubicles (2), and
- a processing device which is operatively connected to the sensor device, and preferably also to the control unit for receiving the observation and for processing the observation in order to generate information about a cubicle content status comprising information about an amount and/or distribution and/or quality of the contents of the cubicles (2), **characterized in that**
- the processing device furthermore comprises reference information as well as at least one comparison criterion, wherein the processing device is configured to compare the information generated with the reference information, and to trigger an alarm signal if the result of the comparison meets at least one of the one or more comparison criteria,
- and furthermore comprising a cubicle treatment vehicle (13), which is preferably autonomously movable under the control of the control unit (7), and comprises at least one of:
- a litter material cleaning device,
- a litter material dispensing device, and
- a litter material redistribution device,
- wherein the cubicle treatment vehicle (13) is controllable based on the alarm signal.

2. The shed (1) as claimed in claim 1, wherein the control unit (7) is configured to send the aircraft (4) a predetermined number of times per unit of time, such as once a day, past at least a subset of the cubicles (2).

3. The shed (1) as claimed in claim 1 or 2, comprising a cubicle occupation-determining device, configured to determine a "cubicle empty" signal if a cubicle (2) is not occupied by an animal (100), wherein the control unit (7) is configured to send the aircraft (4) to an unoccupied cubicle (2), based on the "cubicle empty" signal.

4. The shed (1) as claimed in any of the preceding claims, comprising one or more other devices for carrying out an animal-related action, as well as an animal shed management system which is connected to the control unit (7) and controls the one or more other devices in the shed (1) in respective states, wherein the control unit (7) controls the aircraft (4) on the basis of the respective state.

5. The shed (1) as claimed in claim 4, wherein the one or more other devices comprise a milking device (23) for batch-wise milking dairy animals (100) which can be brought to a milking state by the shed management system, wherein the control unit (7) is configured to move the aircraft (4) based on the milking state.

6. The shed (1) as claimed in claim 4 or 5, wherein the one or more other devices comprise a feed-dispensing station for simultaneously feeding a plurality of animals (100), as well as a feed device which can be brought into a feed-dispensing state by the shed management system, in which feed-dispensing state the feed device dispenses feed to the feed-dispensing station, wherein the control unit (7) is configured to move the aircraft (4) based on the feed-dispensing state.

7. The shed (1) as claimed in claim 4, 5 or 6, wherein the one or more other devices comprise a feed-dispensing station for simultaneously feeding a plurality of animals (100), as well as a feed-pushing device (15) which can be brought into a feed-pushing state by the shed management system, in which feed-pushing state the feed-pushing device (15) pushes back feed at the feed-dispensing station, wherein the control unit (7) is configured to move the aircraft (4) based on the feed-pushing state.

8. The shed (1) as claimed in any of the preceding claims, wherein the sensor device comprises a recording device for recording a spatial image of the contents of a cubicle (2).

9. The shed (1) as claimed in claim 8, wherein the recording device comprises an ultrasound scanner or laser scanner or a stereo camera, such as a 3D camera.

10. The shed (1) as claimed in one of claims 8-9, wherein the processing device is configured to process the recorded spatial image in order to generate information regarding the amount and/or the distribution of the contents of at least one of the cubicles (2), and in particular configured to recognize the cubicles (2) and the livestock animals (100).

11. The shed (1) as claimed in any of the preceding claims, wherein the sensor device comprises a camera (5) for recording an image of the surface of the contents of the cubicles (2), in particular an optical camera, thermal imaging camera or an infrared camera.

12. The shed (1) as claimed in claim 11, wherein the processing device is configured to process the recorded image of the surface in order to generate information regarding the quality of the contents of the cubicles (2).

13. The shed (1) as claimed in claim 12, wherein the processing device is provided with image-recognition software configured to recognize the cubicles (2) and the livestock animals (100), and to generate information about a state, in particular a distribution, soiling or manure content, of material in the cubicle (2).

## Patentansprüche

1. Boxenstall (1) mit mehreren Boxen (2), die mit Einstreumaterial (3) gefüllt sein können und insbesondere gefüllt sind, sowie Boxenüberwachungssystem, das konfiguriert ist, mehrere Boxen (2) für Tiere (100) eines Viehbestands in einem Viehstall zu überwachen, und das mit Folgendem versehen ist:
- einem Fluggerät (4), das auf eigenständige Weise entlang der Boxen (2) beweglich ist, insbesondere einem Zeppelin oder einer Drohne, der bzw. die mit einer Sensorvorrichtung zum Beobachten der Inhalte der Boxen (2) versehen ist,
- einer Steuereinheit (7), die insbesondere auf dem Fluggerät (4) vorgesehen ist, zum Bewegen des Fluggeräts (4) zumindest entlang einer Teilmenge der Boxen (2), und
- einer Verarbeitungsvorrichtung, die zum Empfangen der Beobachtung und zum Verarbeiten der Beobachtung, um Informationen über einen Zustand des Boxeninhalts zu erzeugen, die Informationen über eine Menge und/oder Verteilung und/oder Qualität der Inhalte der Boxen (2) enthalten, mit der Sensorvorrichtung und vorzugsweise ebenfalls mit der Steuereinheit betriebstechnisch gekoppelt ist,
**dadurch gekennzeichnet, dass**
- die Verarbeitungsvorrichtung ferner Referenzinformationen sowie mindestens ein Vergleichskriterium umfasst, wobei die Verarbeitungsvorrichtung konfiguriert ist, die erzeugten Informationen mit den Referenzinformationen zu vergleichen und ein Alarmsignal auszulösen, wenn das Ergebnis des Vergleichs mindestens eines des einen oder der mehreren Vergleichskriterien erfüllt,
- und ferner ein Boxenbehandlungsfahrzeug (13) umfasst, das vorzugsweise unter der Steuerung der Steuereinheit (7) auf eigenständige Weise beweglich ist und umfasst mindestens eines von:
- eine Einstreumaterial-Reinigungsvorrichtung,
- eine Einstreumaterial-Abgabevorrichtung, und
- eine Einstreumaterial-Neuverteilungsvorrichtung,
- wobei das Boxenbehandlungsfahrzeug (13) auf der Grundlage des Alarmsignals steuerbar ist.

2. Stall (1) nach Anspruch 1, wobei die Steuereinheit (7) konfiguriert ist, das Fluggerät (4) eine vorgegebene Anzahl von Malen pro Zeiteinheit, wie etwa einmal am Tag, zumindest an einer Teilmenge der Boxen (2) vorbeizusenden.

3. Stall (1) nach Anspruch 1 oder 2, der eine Boxenbelegungs-Bestimmungsvorrichtung umfasst, die konfiguriert ist, ein "Box leer"-Signal zu bestimmen, wenn eine Box (2) nicht durch ein Tier (100) belegt ist, wobei die Steuereinheit (7) konfiguriert ist, das Fluggerät (4) auf der Grundlage des "Box leer"-Signals zu einer nicht belegten Box (2) zu senden.

4. Stall (1) nach einem der vorhergehenden Ansprüche, der eine oder mehrere andere Vorrichtungen zum Ausführen einer tierbezogenen Handlung sowie ein Tierstallmanagementsystem, das mit der Steuereinheit (7) verbunden ist und die eine oder die mehreren anderen Vorrichtungen im Stall (1) in jeweiligen Zuständen steuert, umfasst, wobei die Steuereinheit (7) das Fluggerät (4) auf der Grundlage des jeweiligen Zustands steuert.

5. Stall (1) nach Anspruch 4, wobei die eine oder die mehreren anderen Vorrichtungen eine Melkvorrichtung (23) zum chargenweisen Melken von Milchtieren (100), die durch das Stallmanagementsystem in einen Melkzustand versetzt werden kann, umfassen, wobei die Steuereinheit (7) konfiguriert ist, das Fluggerät (4) auf der Grundlage des Melkzustands zu bewegen.

6. Stall (1) nach Anspruch 4 oder 5, wobei die eine oder die mehreren anderen Vorrichtungen eine Futterabgabestation zum gleichzeitigen Füttern mehrerer Tiere (100) sowie eine Futtervorrichtung, die durch das Stallmanagementsystem in einen Futterabgabezustand versetzt werden kann, umfassen, wobei die Futtervorrichtung im Futterabgabezustand Futter an die Futterabgabestation abgibt, wobei die Steuereinheit (7) konfiguriert ist, das Fluggerät (4) auf der Grundlage des Futterabgabezustands zu bewegen.

7. Stall (1) nach Anspruch 4, 5 oder 6, wobei die eine oder die mehreren anderen Vorrichtungen eine Futterabgabestation zum gleichzeitigen Füttern mehrerer Tiere (100) sowie eine Futterschiebevorrichtung (15), die durch das Stallmanagementsystem in einen Futterschiebezustand versetzt werden kann, umfassen, wobei die Futterschiebevorrichtung (15) im Futterschiebezustand Futter an der Futterabgabestation zurückschiebt, wobei die Steuereinheit (7) konfiguriert ist, das Fluggerät (4) auf der Grundlage des Futterschiebezustands zu bewegen.

8. Stall (1) nach einem der vorhergehenden Ansprüche, wobei die Sensorvorrichtung eine Aufzeichnungsvorrichtung zum Aufzeichnen eines räumlichen Bildes der Inhalte einer Box (2) umfasst.

9. Stall (1) nach Anspruch 8, wobei die Aufzeichnungsvorrichtung einen Ultraschall-Scanner oder einen Laser-Scanner oder eine Stereokamera wie etwa eine 3D-Kamera umfasst.

10. Stall (1) nach einem der Ansprüche 8-9, wobei die Verarbeitungsvorrichtung konfiguriert ist, das aufgezeichnete räumliche Bild zu verarbeiten, um Informationen bezüglich der Menge und/oder der Verteilung der Inhalte von mindestens einer der Boxen (2) zu erzeugen, und insbesondere konfiguriert ist, die Boxen (2) und die Tiere (100) des Viehbestands zu erkennen.

11. Stall (1) nach einem der vorhergehenden Ansprüche, wobei die Sensorvorrichtung eine Kamera (5) zum Aufzeichnen eines Bildes der Oberfläche der Inhalte der Boxen (2), insbesondere eine optische Kamera, eine Wärmebildkamera oder eine Infrarotkamera, umfasst.

12. Stall (1) nach Anspruch 11, wobei die Verarbeitungsvorrichtung konfiguriert ist, das aufgezeichnete Bild der Oberfläche zu verarbeiten, um Informationen bezüglich der Qualität der Inhalte der Boxen (2) zu erzeugen.

13. Stall (1) nach Anspruch 12, wobei die Verarbeitungsvorrichtung mit Bilderkennungssoftware versehen ist, die konfiguriert ist, die Boxen (2) und die Tiere (100) des Viehbestands zu erkennen und Informationen über einen Zustand, insbesondere eine Verteilung, eine Verschmutzung oder einen Mistgehalt, des Materials in der Box (2) zu erzeugen.

## Revendications

1. Étable à boxes (1) comprenant une pluralité de boxes (2) qui peuvent être remplis, et en particulier sont remplis, de matière à litière (3), ainsi qu'un système de surveillance de box qui est configuré pour surveiller une pluralité de boxes (2) à animaux de bétail (100) dans un enclos à bétail, et qui est pourvu de :
un aéronef (4) qui peut se déplacer de façon autonome le long des boxes (2), en particulier un zeppelin ou un drone, et qui est muni d'un dispositif capteur pour observer le contenu des boxes (2),
une unité de contrôle (7), en particulier située sur l'aéronef (4), pour déplacer l'aéronef (4) au moins le long d'un sous-ensemble des boxes (2), et
un dispositif de traitement qui est connecté de manière fonctionnelle au dispositif capteur, et de préférence également à l'unité de contrôle pour recevoir l'observation et pour traiter l'observation afin de générer des informations concernant un statut de contenu de box comprenant des informations concernant une quantité et/ou une distribution et/ou une qualité du contenu des boxes (2),
l'étable étant **caractérisée en ce que** :
le dispositif de traitement comprend en outre des informations de référence ainsi qu'au moins un critère de comparaison, le dispositif de traitement étant configuré pour comparer les informations générées aux informations de référence et pour déclencher un signal d'alarme si le résultat de la comparaison satisfait à au moins un du ou des critères de comparaison,
et comprend en outre un véhicule de traitement de box (13) qui peut se déplacer de préférence de façon autonome sous le contrôle de l'unité de contrôle (7) et qui comprend au moins un dispositif parmi :
un dispositif de nettoyage de matière à litière,
un dispositif de distribution de matière à litière, et
un dispositif de redistribution de matière à litière,
le véhicule de traitement de box (13) pouvant être contrôlé sur la base du signal d'alarme.

2. Étable (1) selon la revendication 1, dans laquelle l'unité de contrôle (7) est configurée pour envoyer l'aéronef (4) un nombre prédéterminé de fois par unité de temps, par exemple une fois par jour, au-dessus d'au moins un sous-ensemble des boxes (2).

3. Étable (1) selon la revendication 1 ou 2, comprenant un dispositif de détermination d'occupation de box, configuré pour déterminer un signal « box vide » si un box (2) n'est pas occupé par un animal (100), l'unité de contrôle (7) étant configurée pour envoyer l'aéronef (4) vers un box inoccupé (2) sur la base du signal « box vide ».

4. Étable (1) selon l'une quelconque des revendications précédentes, comprenant un ou plusieurs autres dispositifs pour réaliser une action relative à un animal, ainsi qu'un système de gestion d'étable à animaux qui est connecté à l'unité de contrôle (7) et qui contrôle le ou les autres dispositifs dans l'étable (1) dans des états respectifs, l'unité de contrôle (7) contrôlant l'aéronef (4) sur la base de l'état respectif.

5. Étable (1) selon la revendication 4, dans laquelle le ou les autres dispositifs comprennent, pour traire par lots des animaux laitiers (100), un dispositif de traite (23) qui peut être amené dans un état de traite par le système de gestion d'étable, l'unité de contrôle (7) étant configurée pour déplacer l'aéronef (4) sur la base de l'état de traite.

6. Étable (1) selon la revendication 4 ou 5, dans laquelle le ou les autres dispositifs comprennent un poste de distribution d'aliments pour alimenter simultanément une pluralité d'animaux (100), ainsi qu'un dispositif d'alimentation qui peut être mis, par le système de gestion d'étable, dans un état de distribution d'aliments dans lequel le dispositif d'alimentation distribue des aliments au poste de distribution d'aliments, l'unité de contrôle (7) étant configurée pour déplacer l'aéronef (4) sur la base de l'état de distribution d'aliments.

7. Étable (1) selon la revendication 4, 5 ou 6, dans laquelle le ou les autres dispositifs comprennent un poste de distribution d'aliments pour alimenter simultanément une pluralité d'animaux (100), ainsi qu'un dispositif de poussée d'aliments (15) qui peut être mis, par le système de gestion d'étable, dans un état de poussée d'aliments dans lequel le dispositif de poussée d'aliments (15) repousse des aliments vers le poste de distribution d'aliments, l'unité de contrôle (7) étant configurée pour déplacer l'aéronef (4) sur la base de l'état de poussée d'aliments.

8. Étable (1) selon l'une quelconque des revendications précédentes, dans laquelle le dispositif capteur comprend un dispositif d'enregistrement pour enregistrer une image spatiale du contenu d'un box (2).

9. Étable (1) selon la revendication 8, dans laquelle le dispositif d'enregistrement comprend un scanner à ultrasons ou un scanner laser ou une caméra stéréo comme une caméra 3D.

10. Étable (1) selon l'une des revendications 8 à 9, dans laquelle le dispositif de traitement est configuré pour traiter l'image spatiale enregistrée afin de générer des informations concernant la quantité et/ou la distribution du contenu d'au moins un des boxes (2) et en particulier est configuré pour reconnaître les boxes (2) et les animaux de bétail (100).

11. Étable (1) selon l'une quelconque des revendications précédentes, dans laquelle le dispositif capteur comprend une caméra (5) pour enregistrer une image de la surface du contenu des boxes (2), en particulier une caméra optique, une caméra à imagerie thermique ou une caméra infrarouge.

12. Étable (1) selon la revendication 11, dans laquelle le dispositif de traitement est configuré pour traiter l'image enregistrée de la surface afin de générer des informations concernant la qualité du contenu des boxes (2).

13. Étable (1) selon la revendication 12, dans laquelle le dispositif de traitement est muni d'un logiciel de reconnaissance d'image configuré pour reconnaître les boxes (2) et les animaux de bétail (100) et pour générer des informations sur un état, en particulier une distribution, une salissure ou une teneur en fumier, de la matière dans le box (2).
